# EUROPEAN PATENT APPLICATION

(11) **EP 4 712 382 A1**
(43) Date of publication of application: **18.03.2026**
(21) Application number: 24218389.5
(22) Date of filing: 09.12.2024
(51) Int. Cl.: H04L 1/1867

(54) **ZIGBEE ROUTER DEVICE, ZIGBEE END DEVICE, SYSTEM AND METHODS FOR REDUCING REDUNDANCY**

(30) Priority: 13.09.2024 RO 202400524
(71) Applicant: NXP USA, Inc., Austin, TX 78735 (US)
(72) Inventor: Caciuloiu, Cristian, 5656AG Eindhoven (NL)
(74) Representative: Hardingham, Christopher Mark

(57) **Abstract**

A method for delivering data frames from a source device (602) to a Zigbee end device, ZED, (550) via a Zigbee router device, ZR, (510), comprises, at the ZR, receiving (605), a data request and at least one data block (615) from a transmission window of a plurality of data blocks from the source device (602), and placing the received data block in a queue for transmission; receiving (609) a data request from the ZED; transmitting, the received data block from the queue, to the ZED and receiving an acknowledgement from the ZED. The method further includes receiving a re-transmission of the transmission window of the data blocks (625, 630, 635) from the source device (602); and dropping, at least one re-transmitted data block (630), previously received and transmitted by the ZR, and transmitting, by the ZR, the remaining re-transmitted data block(s) (625, 635), to the ZED.

## Description

### Technical Field

The technical field relates to a device, system and method for personal area network (PAN) support. The technical field is applicable to, but not limited to, a device, system and method for reducing the redundancy in a PAN device that employs fragmentation, such as one that uses a Zigbee^{™} protocol.

### Background

In cost-efficient, low-rate (LR), wireless personal area network (WPAN) nodes (as defined in the Institute of Electrical and Electronic Engineers (IEEE) standard: 802.15.4, otherwise referred to as Zigbee^{™} specification), a process of an application support sublayer (APS) data exchange with acknowledgement, including communications across a radio medium between Zigbee^{™} Routers (often referred to as Zigbee^{™} parent nodes or parent Zigbee^{™} Routers (ZRs)) and Zigbee^{™} End Devices (ZEDs), i.e., typically 'sleepy', battery-powered devices, is supported. Parent ZRs maintain their children nodes (Zigbee^{™} end-devices) at the Networking layer, where dedicated data structures exist (e.g., Neighbour Table) and specific functionalities for joining a network or maintaining the age of their children and, most importantly, accessing the network and routing the outgoing packets from their children to the final destination.

The APS sits above the network (NWK) layer, and is the layer in the ZigBee^{™} protocol that understands applications. The APS frame (which is wirelessly transmitted, often referred to as 'over-the-air') includes endpoints, clusters, profile identifiers (IDs), and even groups. The ZigBee^{™} standard defines a "fragmentation window" as a construct that both the communication originator and the receiver build in their respective APS layers in order to track the orderly transmission/confirmation of the blocks. The originator sends the APS frame from within its transmission window. The receiver fills its reception window in an orderly manner with the incoming received blocks: 'Where an Application Service Data Unit (ASDU) is too large to be transmitted within a single Medium Access Control (MAC) data frame, an acknowledged unicast transmission was requested, and fragmentation is permitted for this frame, the ASDU shall be fragmented into a number of smaller byte strings, here referred to as "blocks." Each block is transmitted in a separate frame. Hence, the APS fragmentation window can be TX and RX. A "transmission window" is used to arrange an orderly transaction. The window size is set by the stack profile, and may be set as high as eight blocks. The protocol arranges that all blocks in a transmission window must be received and acknowledged before the window can move on. An acknowledgement is sent when all blocks in the transmission window have been successfully received or, according to the protocol below, to request retransmission of one or more unreceived blocks.'

The APS fragments received by the parent ZR for one of its children are stored in the parent's data transmission queue, waiting for the sleepy Zigbee End Devices (ZED) to extract the data using 802.15.4 Data Request. The child's APS layer is equipped with timers for timeouts, with a transmission window for fragmentation and, importantly, with the APS key possibly unique between the source ZED and the destination, not known to its parent, to decrypt the fragments. The fragmentation window is fixed for all nodes, and it is set by the Zigbee profile, typically set to '1' for Zigbee 3.0 and for Smart Energy. After APS reception of one fragment is finalized, the ZED will trigger a new transmission of the APS ACK, increasing the power consumption.

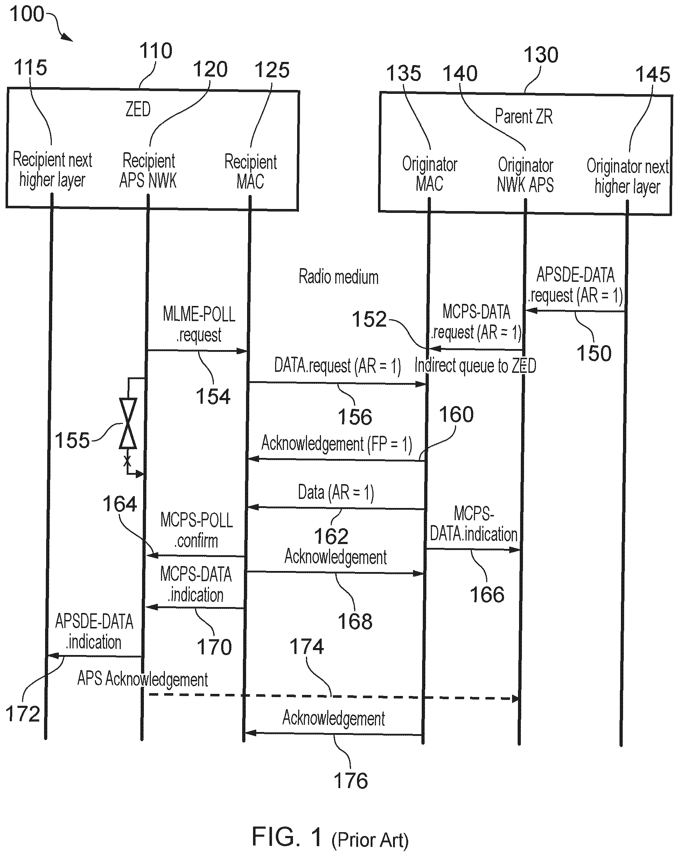

As illustrated in the message sequence chart 100 of FIG. 1, the Zigbee^{™} specification provides a process of an APS data exchange with acknowledgement, including communications across a radio medium between Zigbee^{™} End Device (ZED) 110, sometimes referred to as a 'child' or `child node' and a Zigbee router device, sometimes referred to as a 'parent Zigbee Router (ZR) 130' or parent node'. Data exchanges are made using fragments of the data, which the inventor has identified causes a significant amount of redundant communications. The message sequence chart 100 (in this communication direction) comprises communication functions within the recipient ZED 110 of a Recipient next higher layer 115, a Recipient APS layer 120 and a Recipient medium access control (MAC) layer function 125. Similarly, the parent ZR comprises an Originator next higher layer 145, an Originator APS 140 and an Originator MAC layer function 135. The MAC layer is responsible for delivering frames between two directly communicating nodes, resolving the radio access conflicts between multiple nodes, and providing the necessary signalling information to the interested parties (e.g., MAC ACK acknowledgements, or data indications). The Network (NWK) and APS layers are presented simplified, the former interfacing with the underlying MAC layer in order to initiate data transmission requests 152, command transmission requests 154 or receiving reception notifications 166. The NWK layer finds the network route to deliver the APS layer's packets, commands or user data, across the network, through multiple hops. The user data can be fragmented, if larger than the MAC's transport capability of one single packet, the APS layer ensuring reliable transmission from the Originator node to the Recipient. In order to receive each fragment of data, the recipient ZED 110 sends a data request (Data.Req.) to its parent ZR 130, receives a MAC layer acknowledgement (ACK) of the data request, receives the Data from its parent's queue, sends a MAC (layer) ACK that acknowledges reception of the data, then sends APS ACK and receives a MAC (layer) ACK, as illustrated in FIG. 1.

At 150, an Originator next higher layer 145 sends an APS Data entity (APSDE) request, namely an APSDE-DATA.request (AR=1) to the originator APS 140, which in turn, at 152, through a NWK layer routing function, terminates in a Media Access Control Common Part Sublayer (MCPS) data request, in the form of a MCPS-DATA.request (AR=1), to the Originator MAC layer function 135 within the Parent ZR 130. As the destination is a "sleepy" ZED, which does not have its radio receiver always turned 'on', its parent stores this request into an indirect queue of communications to be sent to the ZED 110. At 154, the Recipient NWK layer sends a MAC Sub-layer Management Entity polling request, in the form of a MLME-POLL.request, at 154 to the Recipient MAC layer function 125.

At 156, the ZED 110 sends a DATA.request (AR=1) to the Originator MAC layer function 135 within the Parent ZR 130. The Originator MAC layer function 135 within the Parent ZR 130 acknowledges the data request at 160 with a MAC ACK with Frame Pending (FP=1). In this manner, the ZED (child) 110 will keep its radio open to receive the APS data. A timeout 155 `apscAckWaitDuration' is used to wait for an acknowledgement, computed to be 1.5 sec according to the Zigbee^{™} profile for stochastic address allocation. Thereafter, at 162, the Originator MAC layer function 135 within the Parent ZR 130 sends the queued APS data packet (AR=1) to the Recipient MAC layer function 125. If the data is valid and successfully decrypted, the ZED (child) 110 is expected to send an APS ACK to its parent which will route it to the originator.

After this point, the Originator MAC layer function 135 sends a MCPS-DATA.indication at 166 to the originator NWK layer and originator APS 140 within the Parent ZR 130, this figure representing a single hop route between the originator APS and the recipient. At 164, within the ZED 110, the Recipient MAC layer function 125 sends a MCPS-POLL.confirm message to the Recipient APS NWK layers 120 and at 168 sends an acknowledgement of the data to the Originator MAC layer function 135 within the parent ZR 130. At 170, within the ZED 110, the Recipient MAC layer function 125 sends a MCPS-DATA.indication message to the Recipient NWK layer and Recipient APS layer 120, then the APS layer at 172 sends an APSDE-DATA.indication message to the Recipient next higher layer 115. At 174, the Recipient APS layer 120 acknowledges the APS transmission using an APS ACK (for brevity this exchange is simplified and represented as dotted line) sent to the Originator APS 140 within the Parent ZR 130. which responds using its MAC layer with a further MAC acknowledgement at 176 to the Recipient MAC layer function 125 within the ZED 110.

Notably, the parent ZR 130 is mains-powered and therefore is able to negotiate with its battery-powered child (e.g., ZED 110) to take on the APS ACK responsibilities (indicated by the dotted line 174), inferring from the MAC ACK 168 that the APS was safely passed on from the parent ZR's 130 indirect queue to the ZED 110 APS receiver reassembly. This Zigbee^{™} communication may use fragmentation to break the larger APS user data (one ASDU, APS Service Data Unit) from the higher layer 145 into packets that can be transported in a MAC layer frame 162.

Examples of Zigbee^{™} profiles using fragmentation and the settings of the window size include:
Telecom Application Profile 0x0107, apsMaxWindowSize=3, maxASDU = 512 bytes
Zigbee Home Automation Profile 0x0104, apsMaxWindowSize=1
Zigbee Smart Energy Profile 0x0109, v 1.2a, apsMaxWindowSize=1

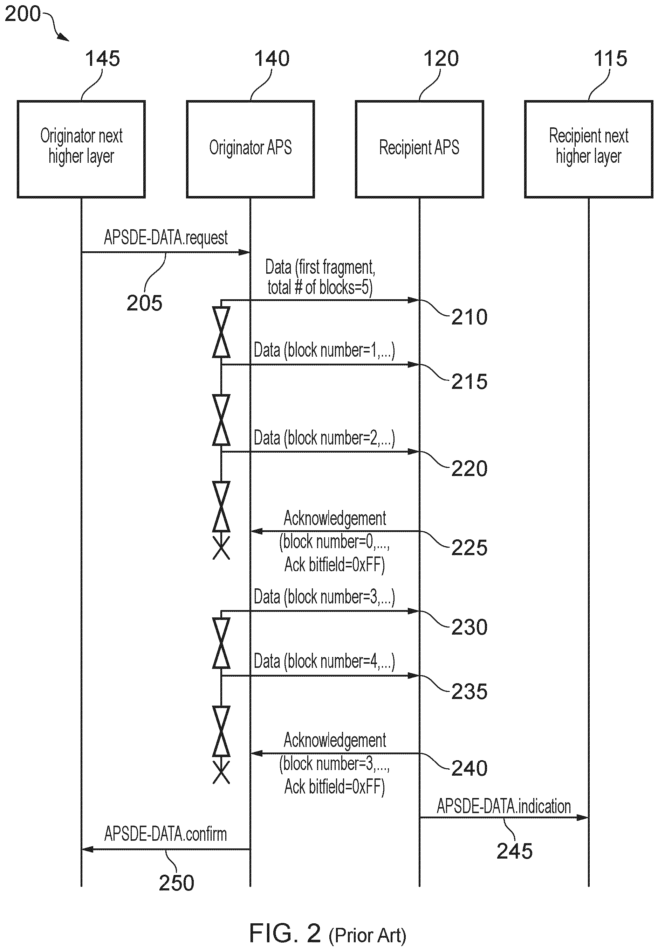

As illustrated in the message sequence chart 200 of FIG. 2, the Zigbee^{™} specification provides a process of an APS data exchange with acknowledgement for a window size = `3', including communications across a radio medium between a 'parent' ZR 130 that includes an Originator next higher layer 145, an Originator APS 140 and a ZED 110 that includes a recipient next higher layer 115 and a Recipient APS layer 120. For every data block, the operations performed by the ZED are: one Data Request transmission (TX) with receive (RX) acknowledgement (ACK), one Data packet RX with TX ACK, one APS ACK TX with RX ACK.

In order to send each fragment of data, the Originator next higher layer 145 sends, at 205, an APSDE-Data.Req to the ZED Originator APS 140, which initiates a number of fragmented data transmissions 210, 215, 220 that is send to the Recipient APS layer 120. The ZR Originator APS 140 receives at 225 acknowledgement (APS ACK) of a successful receipt of the data by the ZED Recipient APS layer 120, and sends further fragmented data transmissions 230, 235 and receives at least one further APS ACK message 240 in response. Once the fragmented data has been successfully transmitted from the ZR to the ZED, the ZR Originator APS 140 sends an APSDE-Data.confirm message 250 to the ZR Originator next higher layer 145 and the Recipient APS layer 120 sends an APSDE-Data.indication message 245 to the ZED recipient next higher layer 115, as illustrated in FIG. 2.

FIG. 2 illustrates the overhead in communication caused due to fragmentation, where overhead is determined as the number of the packets exchanged, but not containing the actual APS data needed by the ZED. In FIG. 2, in order to extract the fragment 210 from its parent, the ZED Recipient sends over the air one Data.Req (see 156 from FIG. 1), receives MAC ACK (see 160 in FIG. 1), then sends APS ACK 225 in FIG. 2 (or 174 in FIG. 1), receives MAC ACK (see 176 in FIG. 1). Thus, the overhead includes: 2xRX ACK (see 160, 176 in FIG. 1), 1xTX ACK (see 168 in FIG. 1), 1xTX Data.Req (see 156 in FIG. 1) and 1xTX APS ACK (see 174 in FIG. 1). The MAC protocol, in order to deliver one frame of data, needs the other packets to signal the readiness to receive and the confirmation of the delivery. In case of `N' fragments, it is clear that this overhead is multiplied by 'N' the number of fragments. The inventor has recognised and appreciated a need to reduce, and preferably optimize, this cumulative overhead, with minimal or no communication errors.

It is known that there are a few reasons for a receiver to reject/fail to accept the already received APS data at MAC layer (confirmed by the MAC ACK to its parent device). For example, a receiver may reject/fail to accept the already received APS due to queueing or improper buffer size (e.g., the incoming APS is longer than the receiver can manage to reassemble). Security failure, such as an 'out of order frame counter' may also cause the receiver to reject/fail to accept the already received APS. None of these reasons are in practical terms recoverable for the overall APS transmission of the entire original packet, primarily because the APS receiver lacks the means to communicate the failure reason to the sender to allow a fix. The only situation in which the receiver can recover from a failure is due to a packet lost along the transmit path, to which the remedy is to re-transmit the same frame, the same size, the same fragmentation parameters. If some of these fragmentation parameters are improperly configured, the frame will fail again and again at the receiver and no APS ACK will be generated. This causes the originator to send another one. However, despite the failures, the ZED will have to attempt to receive each and every one of these frames, wasting valuable power consumption, with no possibility of success.

FIG. 2 illustrates a data payload that is fragmented into `5' blocks. In case of a window size = '1' (the preferred configuration for Zigbee 3.0), the overhead is 5x the basic case, with 10xRX ACK, 5xTX ACK, 5xTX DR, 5xTX APS ACKs. In contrast, for a window size of `3', there are only 2xTX APS ACKs, not 5, and the overhead for the ZED is reduced by 3xTX APS ACKs and their corresponding 3xRX ACKs, with 7xRX ACKs, 5xTX ACKs, 5xTX DRs, 2xTX APS ACKs. Clearly, if conditions are ideal and therefore no re-transmissions occur, a larger window size reduces the radio activity by 3xRX ACK, 3xTX APSACK contributing to reducing the power consumption of the Recipient ZED.

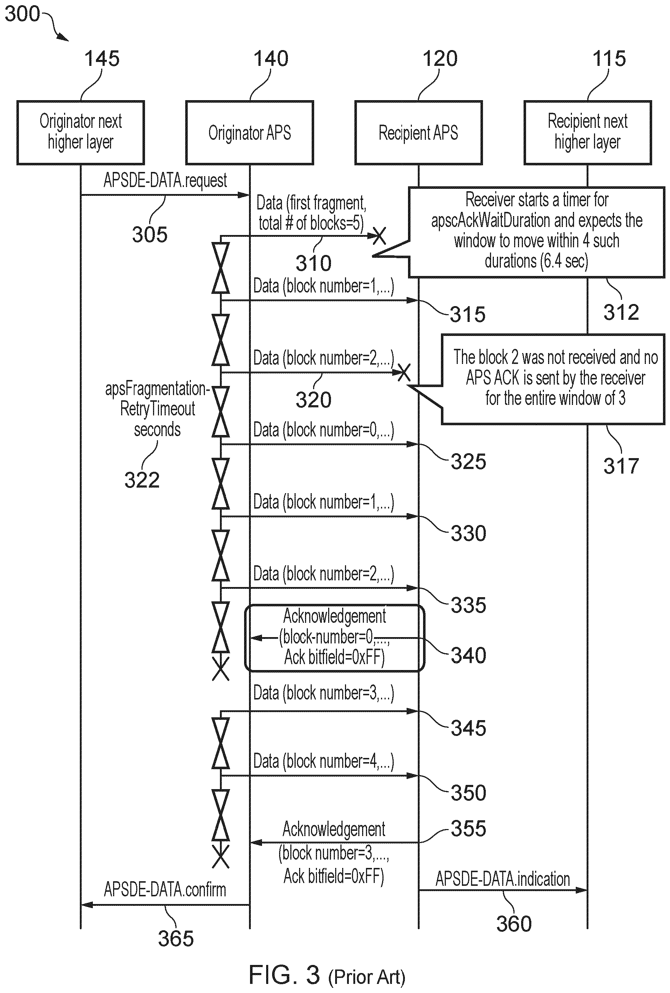

As illustrated in the message sequence chart 300 of FIG. 3, the Zigbee^{™} specification provides a process of an APS fragmented data exchange with multiple re-transmissions and acknowledgements for a window size = `3', across a radio medium between a 'parent' ZR (see 'parent' ZR 130 in FIG. 1) that includes an Originator next higher layer 145, an Originator APS 140 and a ZED (see ZED 110 in FIG. 1) that includes a recipient next higher layer 115 and a Recipient APS layer 120. Again, for every data block, the operations performed by the ZED are: one Data Request transmission (TX) with receive (RX) acknowledgement (ACK), one Data packet RX with TX ACK, one APS ACK TX with RX ACK.

In order to send each fragment of data, the Originator next higher layer 145 sends, at 305, an APSDE-Data.Req to the ZED Originator APS 140, which initiates a number of fragmented data transmissions 310, 315, 320 that is sent to its ZED Recipient APS layer 120. In this multiple re-transmission example, the ZED receiver starts a timer (`apscAckWaitDuration') 312 and expects a response within this interval, the overall reception window being required to move further, after (in this example) `4' such durations. In this example, the third data block 320 (identified as block '2', because the first data block has the identifier '0') transmitted was not received 317 by the recipient APS and therefore no APS ACK is returned by the ZED for the entire window of '3' fragmented data transmissions. As a consequence of no APS ACK, a timeout occurs in the parent ZR 322 and a further three fragmented data re-transmissions 325, 330, 335 are sent to its ZED Recipient APS layer 120. The ZED Recipient APS layer 120 receives the third data block 335 (of three data blocks) and transmits an APS ACK 340 of a successful receipt of the three data blocks by the ZED Recipient APS layer 120, and its parent ZR sends further fragmented data transmissions 345, 350 and receives at least one further APS ACK message 355 in response. Once the fragmented data has been successfully transmitted from the parent ZR to the ZED, the ZR Originator APS 140 sends an APSDE-Data.confirm message 365 to the ZR Originator next higher layer 145 and the Recipient APS layer 120 sends an APSDE-Data.indication message 360 to the ZED recipient next higher layer 115, as illustrated in FIG. 3.

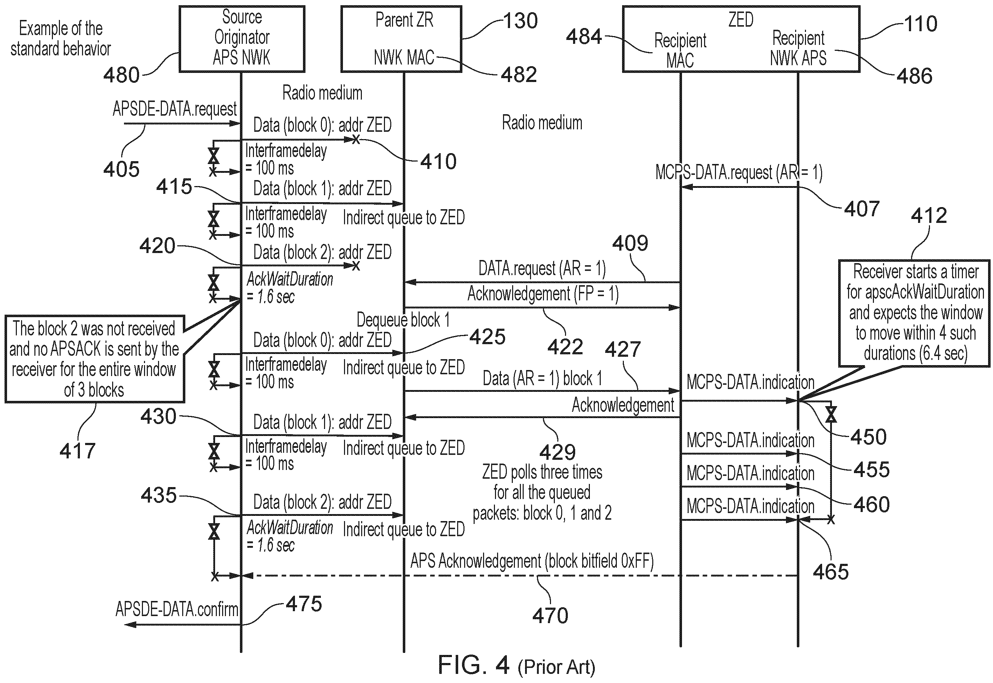

A further example is shown in FIG. 4, where a multi-hop transmission is presented. The source Originator APS 480 is a distinct node (which is not the parent ZR 130 of the recipient ZED 110). The packets sent by the source Originator APS 480 travel through the network, being routed from node to node, enabled by the routing function of the NWK layer of the Zigbee^{™} standard, until they reach the parent of a "sleepy" ZED (or the final destination if that is a router). For brevity, the communication between the source Originator APS 480 and parent ZR 130 are represented at NWK layer, the one responsible for transporting the packets. FIG.4 presents the case of packets being lost along their path, where the fragmentation works through a full window re-transmission mechanism in the absence of the receiver's feedback, because that feedback (the APS ACK bitmap) is only sent 6.4 sec after the reception of the block '1'. In its absence, the originator, i.e., Originator APS 140 in this example, will re-transmit each of the three data blocks 425, 430, 435, 1.6 seconds after transmitting the last data block, i.e., data block `2' 420. The inventor has recognised and appreciated that with this phenomenon, which could occur in cases of network congestion, there is a consequent increase in the amount of network traffic exactly when it is not desired. This effect is because of the unnecessary re-transmission of the already-delivered but unconfirmed blocks. Increasing the traffic leads to increasing the power consumption at battery-powered devices ZED.

As illustrated in the message sequence chart of FIG. 4, the Zigbee^{™} specification provides a process of an APS fragmented data exchange with multiple re-transmissions and acknowledgements for a window size = `3', across a radio medium between a source Originator APS 480 that includes a Source Originator APS and NWK, the 'parent ZR 130 represented by its NWK and MAC layers 482 and a ZED 110 that includes Recipient MAC 484 and a Recipient NWK and APS layers 486. Again, for every data block, the operations performed by the ZED are: one Data Request transmission (TX) with receive (RX) acknowledgement (ACK), one Data packet RX with TX ACK, one APS ACK TX with RX ACK.

In order to send each fragment of data, the Source Originator APS 480 sends through its NWK layer, at 405, an APSDE-Data.Req towards the ZED address, and its NWK layer routes the packet to the NWK layer of the parent ZR 130.. This operation initiates a number of fragmented data transmissions 410, 415, 420 that is sent to its parent ZR NWK MAC 482. In this multiple re-transmission example, the first data block 410 transmitted and third data block 420 were not received 417 by the parent ZR NWK MAC 482 and therefore the ZED has no chance to process them and no APS ACK is returned for the entire window of '3' fragmented data transmissions. In this multiple re-transmission example, the ZED Recipient NWK layer has sent a MCPS-Data.request (AR=1) message 407 to the Recipient MAC 484. In this example, the Recipient MAC 484 sends a Data.request (AR=1) message 409 to the Parent ZR 130 MAC 482, which responds with an ACK (Frame Pending (FP)=1) message at 422. As a consequence of no APS ACK from the Recipient ZED, a further three fragmented data transmissions 425, 430, 435, i.e., the three previous data blocks are re-transmitted by the Source Originator APS 480 to parent ZR 130. The Data is sent across the radio medium at 427 from the parent ZR NWK MAC 482 to the ZED 110 Recipient MAC 484, and each of the tree data packets are acknowledged by the ZED MAC 484 with an ACK like the one shown in 429.

The receiver of the ZED 110 starts a timer (`apscAckWaitDuration') 412 and expects a response within (in this example) '4' durations. Notably, the ZED 110 polls three times for all the queued data packets 0, 1, 2 at 455, 460, 465. Finally, the ZED 110 Recipient APS layer 486 sends an APS ACK 470 to the Source Originator APS 480 across the network, routed by the parent ZR 130 through a multi-hop path. Once the fragmented data has been successfully received at the ZED 110, acknowledged with the APS ACK to the parent ZR 130, the Source Originator APS 480 sends an APSDE-Data.confirm message 475 to an Originator next higher layer, as illustrated in FIG. 4.

Although the example in FIG. 4 illustrates a window size of `3', a skilled artisan will appreciate the same concept and problem applies to any window size. For example, a window size of '1' has a single failed delivery (instead of the illustrated two failed deliveries of 410 and 420 in FIG. 4), a single re-transmission (instead of the illustrated three re-transmitted data blocks of 425, 430 and 435 in FIG. 4), and a single MCPS-Data.indication message instead of the three illustrated messages 450, 455, 460 in FIG. 4. Thus, here in such an example, the parent ZR 130 only performs NWK forwarding.

Thus, the inventor has recognised and appreciated a number of problems with the Zigbee^{™} protocol, and particularly the wasted overhead required due to fragmentation with the operation and the nature of communications performed by a 'sleepy' ZED, e.g., one that is frequently placed into an idle or inactive mode. Furthermore, the inventor has recognised and appreciated that a sleepy ZED constantly polls for the APS data packet, because it turns on the radio from time to time, which aggravates the general overhead problem as the ZED must ask for every data packet by sending one Data Request and receiving one ACK, only to be followed later by receiving the real data packet.

EP 2 750 448 A1 describes a Zigbee^{™} Green Power standard based on proxy redundancy, where the mains-powered routers identify a resource-constrained device wanting/sending a message to the network and collectively, using specific means, engage in forwarding the message on behalf of that ZED. The problem of acknowledged transmission is handled by maintaining a strict layer boundary in the proxies, which are specifically configured to terminate the protocol between the destination and the ZED and repackage the ZED's message into full format of the Zigbee^{™} Application Support Sublayer (APS); hence they are not equipped to take on higher layers' responsibilities on behalf of the ZED. Notably, the NWK layer is only managing the routing and the adaptation to the special addressing mode multicast.

Accordingly, there is a need for an improved device, system and method for reducing the redundancy in a Zigbee network that employs fragmentation that uses a Zigbee^{™} protocol.

### Summary

Examples herein described provide a device, system and method for method for delivering data frames from a source device to a Zigbee end device, ZED, via a Zigbee router device, as described in the accompanying claims. Specific example embodiments are set forth in the dependent claims. These and other aspects will be apparent from and elucidated with reference to the embodiments described hereinafter.

According to a first aspect, there is provided a method for delivering data frames from a source device to a Zigbee end device, ZED, via a Zigbee router device. The method includes, at the Zigbee router device, receiving a data request from the source device; receiving at least one data block from an application support sublayer (APS) layer fragmentation window that includes a plurality of data blocks from the source device, and placing the received at least one data block in a queue for transmission to the ZED; decrypting a network, NWK, layer payload of received data blocks; extracting APS header information from the decrypted NWK layer payload and determining therefrom if fragmentation is used; and extracting APS transmission parameters from the decrypted NWK layer payload that enable the Zigbee router device to identify re-transmitted APS data blocks. The method further includes: receiving and acknowledging a data request from the ZED; transmitting the at least one received data block from the queue, to the ZED and in response receiving an acknowledgement for a successfully received transmission from the ZED. The method further includes receiving a re-transmission of the at least one APS data block from the source device; dropping at least one APS re-transmitted data block (630) that had previously been received at the Zigbee router device and successfully delivered to and acknowledged at MAC layer by the ZED, and placing a newly received at least one APS re-transmitted data block in the queue for transmission to the ZED if not already queued; and transmitting the at least one received re-transmitted data block from the queue, to the ZED In this manner, the method also protects the ZED from having to handle the aforementioned communication errors, which would previously require re-transmissions and, hence, require more power consumption by the ZED.

According to a second aspect, there is provided a Zigbee router device for delivering data frames from a source device to a Zigbee end device, ZED. The Zigbee router device includes: a receiver arranged to receive: a data request from the source device; at least one data block from a window that includes a plurality of data blocks from the source device, and a data request from the ZED. A processor is operably coupled to the receiver and arranged to: place the received at least one data block in a queue for transmission to the ZED; decrypt a network, NWK, layer payload of received data blocks and extract application support sublayer, APS, header information from the decrypted NWK layer payload and determine therefrom if fragmentation is used and extract APS transmission parameters from the decrypted NWK layer payload that enable the Zigbee router device to identify re-transmitted APS data. A transmitter operably coupled to the processor is arranged to transmit the at least one received APS data block from the queue, to the ZED. The receiver is further arranged to receive: an acknowledgement for a successfully received transmission from the ZED; and a re-transmission of the at least one APS data block from the source device. The signal processor is arranged to identify and drop at least one APS re-transmitted data block that had previously been received at the Zigbee router device and successfully delivered to and acknowledged at MAC layer by the ZED, and place a newly received at least one APS re-transmitted data block (625, 635) in the queue for transmission to the ZED if not already queued. The transmitter is further arranged to transmit the at least one received re-transmitted data block from the queue to the ZED.

According to a third aspect, there is provided a Zigbee communication network comprising: a Zigbee end device arranged to support Zigbee^{™} communications; a source device arranged to provide a plurality of data frames in a window that includes a plurality of data blocks; and a Zigbee router device according to the second aspect, comprising a memory; and a processor arranged to perform operations according to the third aspect.

### Brief description of the drawings

Further details, aspects and example embodiments will be described, by way of example only, with reference to the drawings. In the drawings, like reference numbers are used to identify like or functionally similar elements. Elements in the figures are illustrated for simplicity and clarity and have not necessarily been drawn to scale.
FIG. 1 illustrates a simplified known message sequence chart representation of a known process of an APS data exchange with acknowledgement, between a Zigbee^{™} End Device (ZED) and a Zigbee router device in accordance with the Zigbee^{™} specification.
FIG. 2 illustrates a simplified known message sequence chart representation of a known successful data transmissions with fragmentation in accordance with the Zigbee^{™} specification.
FIG. 3 illustrates a simplified known message sequence chart representation of a fragmented data transmission with multiple re-transmissions in accordance with the Zigbee^{™} specification.
FIG. 4 illustrates a comparable simplified known message sequence chart representation of a standard behaviour between an APS source node communicating through a multi-hop path through a parent Zigbee^{™} device and its child Zigbee^{™} device using fragmented data transmission with multiple re-transmissions in accordance with the Zigbee^{™} specification.
FIG. 5 illustrates a block diagram of a Parent ZR communicating with a ZED, adapted in accordance with some example embodiments.
FIG. 6 illustrates a simplified message sequence chart with a Source Originator device communicating with a Parent ZR communicating with a ZED, with failed delivery and a window size of '3' and where the parent ZR only reduces the already delivered frames, according to some example embodiments.
FIG. 7 illustrates a simplified message sequence chart with a Source Originator device communicating with a Parent ZR communicating with a ZED, with failed delivery and a window size of '1' between the Source Originator device and the ZED, but where the Source Originator device and the parent ZR communicate as if the APS window size is set to `8', and where the parent ZR saves in a queue the APS blocks and generates the APS ACK in anticipation of the ZED's poll, according to some example embodiments.
FIG. 8 illustrates a simplified timing diagram of fragmented transmissions, according to some example embodiments.
FIG. 9 illustrates a tabular format of amended sequence numbers when APS ACKs are sent, according to some example embodiments.

### Detailed description

In order to avoid the time, system impact and power consumption for transmitting multiple APS ACK messages, it is envisaged that in some examples that the Zigbee parent node may be configured to improve the standard Zigbee behaviour by intervening and sparing the child from having to transmit these intermediate APS ACK messages. Instead, concepts herein described enable the parent ZR to transmit the APS ACK messages by itself on behalf of the child, except for the last block of the fragmented transmission.

In some examples, the concepts described herein propose a cross-layer, i.e., MAC + NWK + APS layers, optimization in the parent ZR device to maximize the fragmentation window, i.e., a window for data block communications between the parent and the ZED, due to reduction in the communication overhead that the larger window brings. Notably, this cross-layer optimization that maximizes the fragmentation window is performed independently of the window size used by the Source Originator, in order to reduce the number of APS ACKs sent by the ZED (child device). Typically, a user will set the system profile, say, with a window size = `3', and all the devices/nodes in the network follow this setting. Hence, the "fragmentation window" capacity will be of '3' blocks. In accordance with some examples, the parent ZR is configured to send the APS ACKs on behalf of its child (ZED) as expected by the Source Originator, except for the last data block of the data packet. This will be sent only by the child and will authenticate the entire packet transmission. One benefit of this approach is that packet losses caused by upstream hops no longer cause radio activity to the child device, because the parent will order the incoming blocks, remove duplicates and pass them to the child device without any missing blocks. Notably, the current specification of the Zigbee standard does not have a cross-layer mechanism to allow the parent to help the ZED with any such activities. In contrast, examples herein described enable the parent to reduce the traffic to the ZED. In examples herein-described, the communication between the parent and its child assumes a window size of `8' blocks (independent of the window size used and expected by the APS Source node), the maximum supported by Zigbee, removing the intermediate APS ACK 427 in FIG. 4.

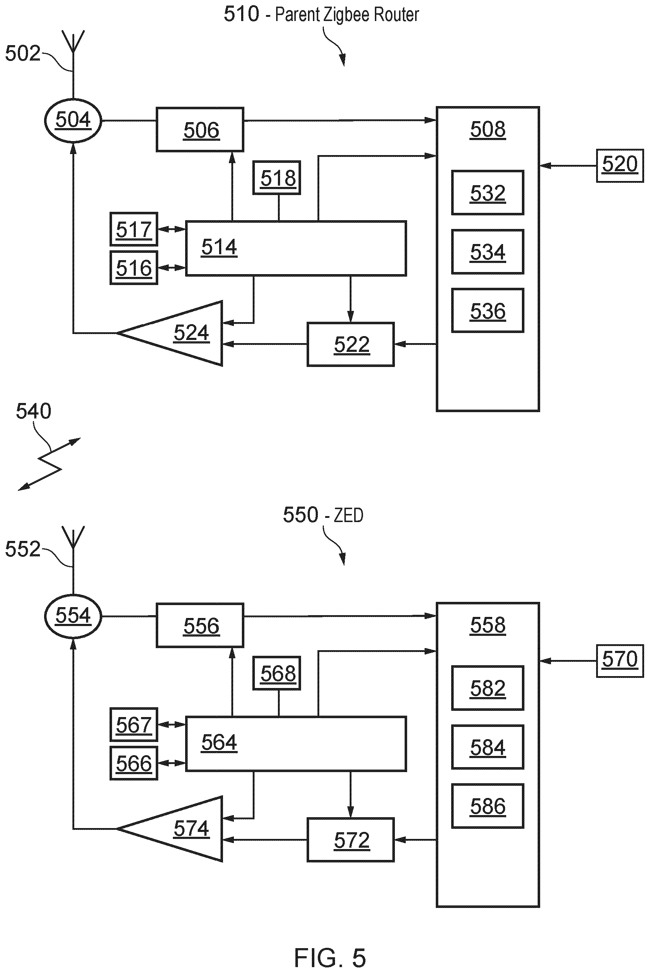

Referring now to FIG. 5, a block diagram of a parent PAN device, such as a parent ZR 510, communicating with a child PAN device (such as a ZED 550) is illustrated, where the respective communications units have been adapted in accordance with some example embodiments.

The parent ZR 510 contains an antenna 502, for receiving transmissions, coupled to an antenna switch or duplexer 504 that provides isolation between receive and transmit chains within the parent ZR 510. One or more receiver chains, as known in the art, include receiver front-end circuitry 506 (effectively providing reception, filtering and intermediate or base-band frequency conversion). The receiver front-end circuitry 506 is coupled to a signal processor 508 (generally realized by a digital signal processor (DSP)). The signal processor comprises a decryption circuit 532 configured to perform decryption on the NWK layer payload that contains the APS header received from an Originator. The signal processor 508 also comprises traffic analysis circuit 534. The traffic analysis circuit 534 is configured to monitor and record traffic, so that the parent ZR knows what NWK data packets of the NWK layer payload have already delivered to the ZED 550. Notably, in this context, the Source Originator does not know what NWK data packets have been delivered because the confirmation from ZED or indeed parent ZR failed to reach it. The signal processor 508 also comprises data management circuit 536 of the parent ZR 510, configured to control and manage data frames on behalf of its ZED 550. The data management circuit 536 will reorder received data blocks and drop any possible duplicates that occur.

The controller 514 maintains overall operational control of the parent ZR 510. The controller 514 is also coupled to the receiver front-end circuitry 506 and the signal processor 508. In some examples, the controller 514 is also coupled to a frequency generation circuit 517 and a memory device 516 that selectively buffers data and stores operating regimes, such as decoding/encoding functions, and the like. A timer 518 is operably coupled to the controller 514 to control the timing of operations (e.g., transmission or reception of time-dependent signals) within the parent ZR 510.

As regards the transmit chain, this essentially includes an input 520, coupled in series through transmitter/modulation circuitry 522 and a power amplifier 524 to the antenna 502, antenna array, or plurality of antennas. The transmitter/ modulation circuitry 522 and the power amplifier 524 are operationally responsive to the controller 514. The signal processor 508 in the transmit chain may be implemented as distinct from the signal processor in the receive chain. Alternatively, a single processor may be used to implement a processing of both transmit and receive signals, as shown in FIG. 5. Clearly, the various components within the parent ZR 510 can be realized in discrete or integrated component form, with an ultimate structure therefore being an application-specific or design selection. A skilled artisan will appreciate that the level of integration of receiver circuits or components may be, in some instances, implementation-dependent.

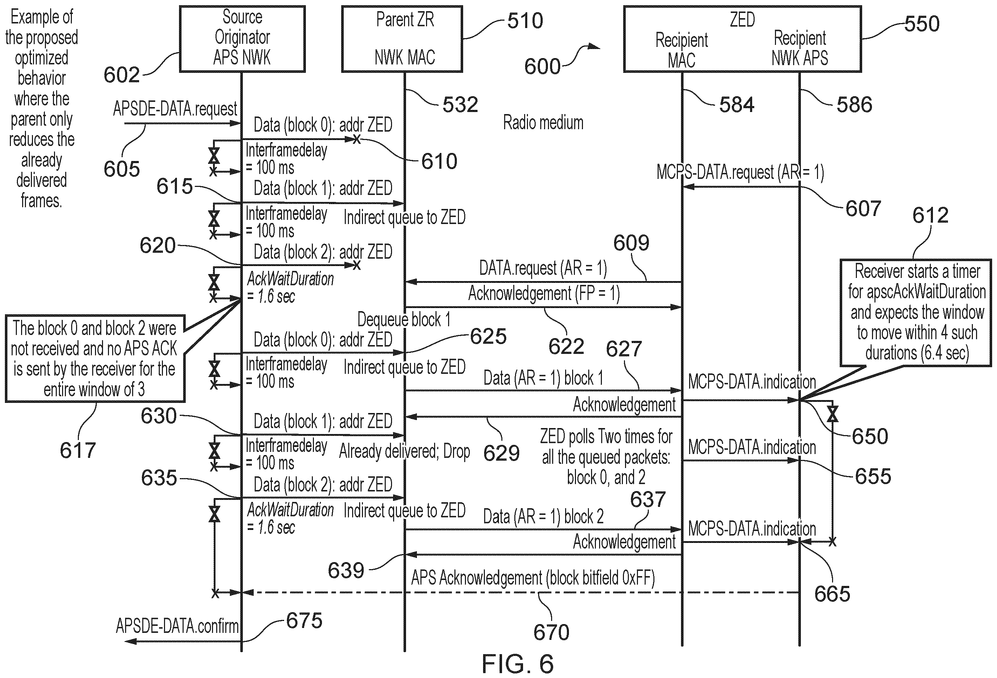

In accordance with some examples, related to the subsequently described FIG. 6, the receiver 508 is arranged to receive: a data request from a source device; at least one data block from a window that includes a plurality of data blocks from the source device, and a data request from a ZED. The signal processor 508 is operably coupled to the receiver 506 and arranged to: place the received at least one data block in a queue for transmission to the ZED; decrypt a network, NWK, layer payload of received data blocks and extract application support sublayer, APS, header information from the decrypted NWK layer payload and determine therefrom if fragmentation is used and extract APS transmission parameters from the decrypted NWK layer payload that enable the Zigbee router device 510 to identify re-transmitted APS data. The transmitter 522, 524 operably coupled to the signal processor 508 is arranged to transmit the at least one received data block from the queue, to the ZED. The receiver 506 is further arranged to receive: an acknowledgement for a successfully received transmission from the ZED; and a re-transmission of the at least one APS data block from the source device. The signal processor 508 is arranged to identify and drop at least one APS re-transmitted data block (630) that had previously been received at the Zigbee router device and successfully delivered to and acknowledged at MAC layer by the ZED, and place a newly received at least one APS re-transmitted data block in the queue for transmission to the ZED 550 if not already queued. The transmitter 522, 524 is further arranged to transmit the at least one received re-transmitted data block from the queue to the ZED.

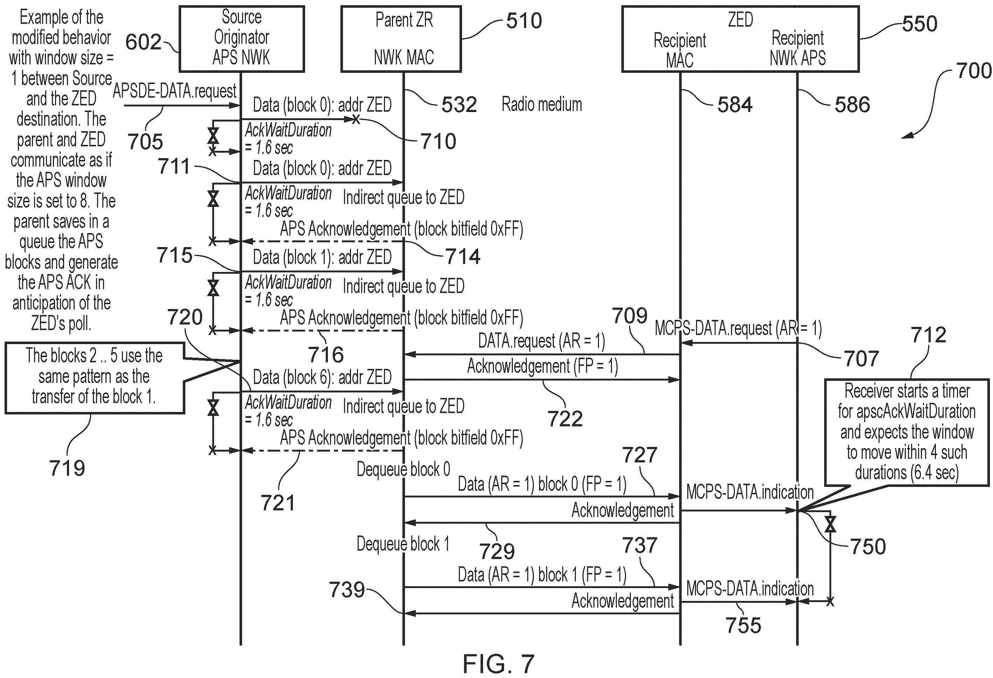

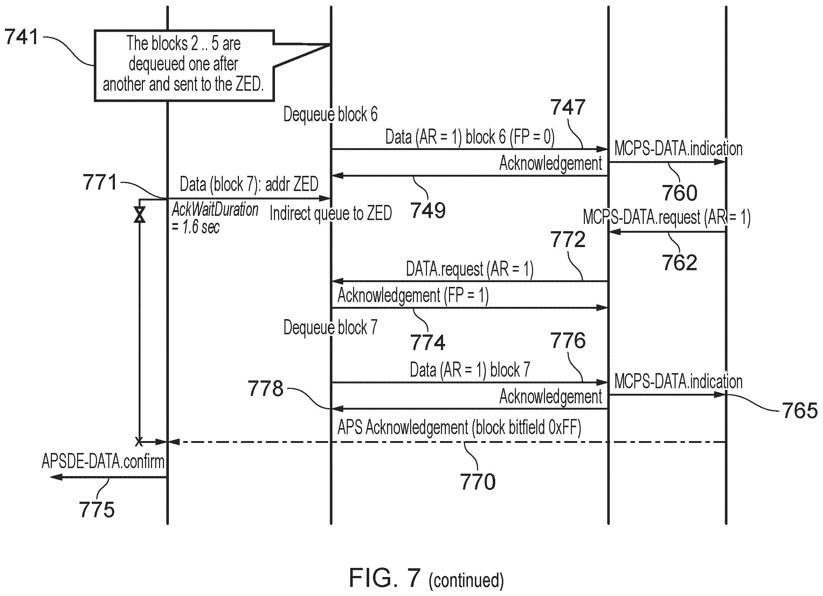

In accordance with some examples, related to the subsequently described FIG. 7, the receiver 506 is arranged to receive from a source device: a data request and a plurality of individual data blocks with a fragmentation window of '1' data block between the Zigbee router device 510 and the source device. The signal processor 508 is arranged to: decrypt (e.g. in decryption circuit 532) a network layer payload of received data blocks; extract application support sublayer, APS, header information from the decrypted NWK layer payload and determine therefrom if fragmentation is used; extract APS transmission parameters from the decrypted NWK layer payload that enable the Zigbee router device 510 to identify re-transmitted APS data; and place each data block received from the source device in a queue for transmission to the ZED. If no acknowledgement is transmitted to the source device, the data block is re-transmitted from the source device until an acknowledgement of a successful receipt of the re-transmitted data block is transmitted to the source device. The transmitter 522, 524 is arranged to individually transmit an APS acknowledgement for received data blocks identified by the APS transmission parameters; and transmit respective individual data blocks from the queue to the ZED. The receiver 506 is further arranged to receive and acknowledge a data request from the ZED; and receive individual acknowledgements for a successfully received data block from the ZED; wherein if no acknowledgement is received at the Zigbee router device 510 in response to a transmitted data block, the transmitter 522, 524 is arranged to re-transmit the data block to the ZED until an acknowledgement is received. Following a successful receipt of a penultimate individual data block with a fragmentation window of '1' data block from the plurality of individual data blocks having been transmitted from the Zigbee router device and acknowledged as successfully received by the ZED. The receiver is further arranged to receive: a second data request from the ZED for a final data block; an APS acknowledgement following successfully receiving the final data block from the ZED. The transmitter is further arranged to transmit an acknowledgement of successfully receiving the final data block to the source device.

FIG. 5 also shows a high-level block diagram of the ZED 550 that contains an antenna 552, for receiving transmissions, coupled to an antenna switch or duplexer 554 that provides isolation between receive and transmit chains within the ZED 550. One or more receiver chains, as known in the art, include receiver front-end circuitry 556 (effectively providing reception, filtering and intermediate or base-band frequency conversion). The receiver front-end circuitry 556 is coupled to a signal processor 558 (generally realized by a digital signal processor (DSP)). A skilled artisan will appreciate that the level of integration of receiver circuits or components may be, in some instances, implementation-dependent.

The controller 564 maintains overall operational control of the ZED 550. The controller 564 is also coupled to the receiver front-end circuitry 556 and the signal processor 558. In some examples, the controller 564 is also coupled to a frequency generation circuit 567 and a memory device 566 that selectively stores operating regimes, such as decoding/encoding functions, and the like. A timer 568 is operably coupled to the controller 564 to control the timing of operations (e.g., transmission or reception of time-dependent signals) within the ZED 550.

As regards the transmit chain, this essentially includes an input 570, coupled in series through transmitter/modulation circuitry 572 and a power amplifier 574 to the antenna 552, antenna array, or plurality of antennas. The transmitter/ modulation circuitry 572 and the power amplifier 574 are operationally responsive to the controller 564.

The signal processor 558 in the transmit chain may be implemented as distinct from the signal processor in the receive chain. Alternatively, a single processor may be used to implement a processing of both transmit and receive signals, as shown in FIG. 5. Clearly, the various components within the ZED 550 can be realized in discrete or integrated component form, with an ultimate structure therefore being an application-specific or design selection.

In accordance with some examples, related to the subsequently described FIG. 6 and/or FIG. 7, the receiver 556 is arranged to receive, the transmitter 572, 574 is arranged to transmit and the signal processor 508 is arranged to process signals according to the functions of the ZED 550 as previously described with regard to the Zigbee router device 510.

In a standard parent ZR behaviour, the NWK layer only deals with forwarding the incoming packets to its Zigbee^{™} child (ZED), on Data Requests polls. The parent ZR does not inspect the NWK layer payload encrypted with the network key. Instead, it uses the address source and destination from the NWK header, which is not encrypted, to determine the route of the packet (the next hop if the destination address is not its own or one of its ZED children). The APS fragmentation information is present in the APS header which is part of the secured NWK payload, encrypted with the active network key. All the Zigbee^{™} nodes in a network share the same network layer key, obtained after joining the network.

| Octets: variable | 14 bytes | Variable | | |
|---|---|---|---|---|
| Original NWK header | Auxiliary frame header | Original APS header | Auxiliary frame header | Encrypted payload |
| | | Full APS header | | Secured APS payload |
| Full NWK header | | Secured NWK payload | | |

This is important because decrypting the packet is the "cross-layer" intervention that the ZR performs on behalf of its child. However, in examples herein described, in order to inspect the APS header, to detect a fragmented transmission towards one of its children, i.e., ZED 550, the decryption circuit 532 of the parent ZR 510 is now configured to decrypt a NWK layer payload that contains an APS header, e.g., the first AES-128 bits of the NWK payload, received from an Originator. Furthermore, the parent ZR 510 is configured to cross the layer boundary from the NWK (header) into the APS. Here, a traffic analysis circuit 534 of the parent ZR is configured to reduce the redundant traffic to the ZED, i.e., traffic that the parent ZR knows was already delivered to the ZED, but the Source Originator does not know because the confirmation from ZED or indeed parent ZR failed to reach it. In some examples, the beginning of the fragmented transmission is marked by an extended header with the fragmentation field set to '1'. It also contains the total number of blocks in this transmission (11 blocks in this example).

Since the standard fragmentation window is typically set to '1' for Zigbee^{™} 3.0 (and in the R23 new version), the parent ZR can already send the APS ACK to the Source Originator because this is not APS encrypted, but only NWK secured. The Zigbee^{™} standard provides a commitment to preserving, as much as possible, compatibility and interoperability with legacy reference implementations of earlier standard revisions, as well as providing a rich selection of security features that are left to the application to enable based on the specific security needs (as opposed to a "one size fits all" that imposes heavy demands on all types of implementations). The APS layer packets include three categories: data, commands and acknowledgements. The security requirements for the data packets are not defined and are left for the application to establish. For the APS commands, each item is specifically characterized as to whether it must be APS encrypted or, when this is not required, e.g., the receiving device is not capable of receiving APS encrypted APS commands, then the sending device can either not send the APS commands or send APS commands without APS encryption. Thus, it is left up to the Zigbee^{™} device manufacturers and the Zigbee^{™} network implementers to determine whether, or not, the receiving device is capable of receiving an APS command with APS encryption. A device may simply send two copies of the APS command, one with APS encryption and one without APS encryption, in order to satisfy the requirements of interoperability with existing devices. In the R.22 revision of the Zigbee^{™} standard, the APS acknowledgments are considered a separate packet type and their security requirements were left unspecified (again, implementation specific), up to the R23 revision of the standard. Thus, implementations up to and including R.22.2, for an improved interoperability in the field, were capable of accepting the APS ACK without constraining its security requirements. In the R23 revision, this relaxed aspect is gradually restricted, e.g., in the sense that a Recipient APS layer must respond with an APS ACK having the same security level as the associated data (having the same APS counter) or command from the Originator APS layer. For interoperability reasons, the reception and acceptance of the APS ACK is not explicitly dependent on having the same APS security. However, it is expected that in future standard revisions, this will be completely specified and the implementation freedom-degree will be reduced. For this reason, examples herein described permit the parent ZR 510 the access to sufficient information, such that this parent ZR 510 would be able to construct not only a NWK-encrypted APS ACK but also construct a NWK- and APS-encrypted APS ACK with the APS layer credentials known only to the child ZED 550.

For as long as the there is room in the indirect queue of the parent ZR 510 for its child ZED 550, it can continue to send APS ACK on behalf of its ZED 550 except for the last block of the transmission_(in the example, block number '10', starting from '0'). If there is no room, the parent ZR will drop the new blocks and allow APS re-transmissions to occur, whilst waiting for the ZED to wake up and poll. One example of the network payload for a first block of an APS fragmented transmission containing '11' blocks numbered from '0' to `10' communicated in the APS extended header, is as follows:

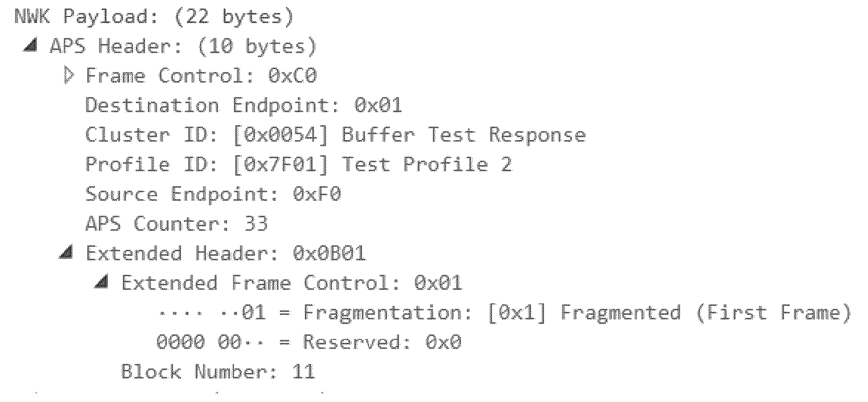

If out of order blocks are received, the data management circuit 536 of the parent ZR 510, notably on behalf of its ZED 550, will reorder the data blocks and drop any possible duplicates that occur, for example due to the APS ACK failing to reach the Source Originator. These concepts are further illustrated in FIG. 6 and FIG. 7 and described below.

In this manner, the parent Zigbee Router 510 may be configured to improve the standard Zigbee^{™} behaviour by intervening and sparing the ZED 550 from having to transmit intermediate APS ACK messages, thereby saving time, system impact on using a valuable radio resource, and reducing power consumption in the ZED 550 in having to transmit multiple APS ACK messages. In particular, the examples enable the parent ZR 510 to transmit the APS ACK messages by itself on behalf of the ZED 550, except for the last block of the fragmented transmission.

In some examples, the concepts described herein propose a cross-layer, i.e., NWK + APS layers, optimization in the parent ZR device to maximize the fragmentation window, i.e., a window for data block communications between the parent and the ZED, independent of the window used between the Originator and the ZED 550, in order to enable network capacity enhancements.

Referring now to FIG. 6, a simplified message sequence chart 600 is illustrated that shows a Source Originator APS NWK device 602 communicating through a multi-hop route with a parent ZR 510 communicating with a ZED 550, with failed delivery of some blocks and a window size of '3' and where the parent ZR 510 only reduces the already delivered frames, according to some example embodiments. Notably, the fragmentation no longer works through a full window re-transmission mechanism, in the absence of the receiver's feedback. In this example, the parent ZR determines that at least one data block, i.e., data block 615 has been received successfully and already been delivered in 627 to the ZED 550 recipient MAC 584, and consequently 'drops' from the queue any already-delivered data packets from the re-transmission process, for example the block '1' re-transmitted by the Source Originator APS at 630.

As illustrated in the message sequence chart 600 of FIG. 6, the Zigbee^{™} specification provides a process of an APS fragmented data exchange with multiple re-transmissions and acknowledgements for a window size = `3', across a radio medium between a parent ZR 510 comprised of a NWK MAC 532 that is connected to a Source Originator APS NWK 602 and a ZED 550 that includes Recipient MAC 584 and a Recipient NWK APS 586.

In order to send each fragment of data, the Source Originator APS NWK 602 sends, at 605, an APSDE-Data.Req to the NWK MAC 532, which initiates a number of fragmented data transmissions 610, 615, 620 that is sent to parent ZR NWK MAC 532. In this multiple re-transmission example, the first data block 610 transmitted and third data block 620 were not received 617 by the parent ZR NWK MAC 532 and therefore no APS ACK is returned for the entire window of '3' fragmented data transmissions. In this multiple re-transmission example, the ZED Recipient NWK APS 586 has sent a MCPS-Data.request (AR=1) message 607 to the Recipient MAC 584. In this example, the Recipient MAC 584 sends over the air a Data.request (AR=1) message 609 to the Parent ZR NWK MAC 532, which responds with an ACK (Frame Pending (FP)=1) message at 622.

In known networks, as a consequence of no APS ACK being received at the Source Originator 602, a further three fragmented data transmissions, i.e., the three previous data blocks would be re-transmitted to the parent ZR 510 and then re-transmitted to it's ZED, i.e., the ZED Recipient MAC 584 using valuable radio medium resource. The Data received and queued at parent ZR 510, i.e., solely data block '1' 615, is sent across the radio medium at 627 from the parent ZR NWK MAC 532 to the ZED 550 Recipient MAC 584, which is returned with an ACK 629.

However, in accordance with examples herein described and as a consequence of no APS ACK, the parent ZR 510 is configured to identify that the second data block, i.e., data block '1' 615, had already been successfully received from the Source Originator 602 and delivered to the ZED Recipient MAC 584 and transmitted to ZED 550 at 627. Thus, the acknowledgement of this successful transmission solely of Data block '1' is sent at 629 from the recipient MAC 584 of the ZED 550 to the NWK MAC of the parent ZR 510. In accordance with some examples, the parent ZR 510 then drops/ignores this second data block 615 from the fragmented data re-transmissions, i.e., it solely queues a re-transmitted first data block 625 and a re-transmitted third data block 635.

In this example, the receiver of the ZED 550 starts a timer (`apscAckWaitDuration') 612 and expects a response within (in this example) '4' durations. Notably, the ZED 550 polls two times and solely for the (not yet received) data packets '0', `2' at 655, 665. This is in contrast to the known network approach that would require the ZED 550 to poll three times, retrieving once again the block '1' only to drop it in its own Recipient APS layer 586 because it had one copy already, a situation that reflects the selected window size of `3'. The ZED 550 Recipient NWK APS 586 sends an APS ACK to the Source Originator APS NWK 602. Once all of the fragmented data blocks have been successfully received at the ZED 550, this is acknowledged with the APS ACK 670 (depicted using a dashed line, for brevity, as the mechanisms utilized throughout its road to the destination being those of a standard transmission) to the parent ZR 510, which then routes it to the Source Originator APS NWK 602, which sends an APSDE-Data.confirm message 675 to an Originator next higher layer, as illustrated in FIG. 6.

The inventor has recognised and appreciated that, in this manner, a reduction in network congestion can be achieved, due to a consequent decrease in the amount of network traffic, as a result of fewer re-transmissions, i.e., no re-transmissions of the already-delivered data blocks. Consequently, this leads to decreasing the power consumption at battery-powered devices, such as ZED 550, due to fewer polling (as it no longer polls each of the requested data blocks as it has received one or more of said data blocks). Such decreasing of the power consumption at battery-powered devices is acknowledged as significant desire as available power at battery-powered devices is an extremely valuable resource.

Furthermore, in this manner, the current wasted overhead required due to fragmentation and the nature of communications performed by a 'sleepy' ZED 550, e.g., one that is frequently placed into an idle or inactive mode, the overhead may be reduced. In particular, a sleepy ZED 550 polls for the APS data packet fewer times, thereby also reducing the general overhead problem as the ZED 550 no longer must ask for every data packet by sending one Data Request and receiving one ACK, only to be followed later by receiving the real data packet.

FIG. 7 illustrates an alternative second approach to resolving the aforementioned network congestions problems. FIG. 7 illustrates a simplified message sequence chart with a Source Originator device communicating with a Parent ZR communicating with a ZED, with failed delivery and a window size of '1' between the Source Originator device and the ZED, but where the ZED device and the parent ZR communicate as if the APS window size is set to `8', and where the parent ZR saves in a queue the APS blocks and generates the APS ACK in anticipation of the ZED's poll, according to some example embodiments. In the message sequence chart 700 of FIG. 7, the Zigbee^{™} specification process of an APS fragmented data exchange with so-called multiple re-transmissions and acknowledgements is still supported, albeit in a modified sense. A radio medium exists between a parent ZR 510 and a Source Originator APS NWK 602 and that parent's NWK MAC and a ZED 550 that includes Recipient MAC 584 and a Recipient NWK APS 586.

Notably, the fragmentation no longer works through a full window re-transmission mechanism, in the absence of the ZED receiver's feedback. In this example, as the APS window size is set to a maximum Zigbee^{™} window size of '8' between the parent ZR device 510 and the ZED 550, the parent ZR 510 proactively stores/queues each block for its ZED 550 and sends an APS acknowledgement to the Source Originator APS 602. In order to send each fragment of data, the Source Originator APS 602 handles, at 705, an APSDE-Data.Req, processes it by fragmenting the message for transmission and passes each block to the NWK layer. For brevity, the communication between the NWK layer of the Source Originator APS 602 and the NWK layer of the Parent ZR 510 is not detailed in the figure, but it is assumed to be over a multi-hop communication path. Over this path, the Source Originator APS 602 initiates a number of fragmented data block transmissions 710, 715, 720 that is sent to parent ZR NWK MAC, being routed by the NWK layers of the Zigbee^{™} nodes in the network along this path.

Thus, as illustrated, Source Originator APS 602 sends a first data block, i.e., data block '0' 710 to the parent ZR 550, which fails to be delivered at the parent ZR 550. Hence, no APS ACK from the parent ZR 550 is returned to the Source Originator APS 602. Hence, because the window size is set to '1' and each block requires its own APS ACK before the transmitter moves to the next one, the Source Originator APS 602 re-transmits the first data block, i.e., data block '0' at 711 to the parent ZR 550, which is delivered at the parent ZR 550 and an APS ACK at 714 returned with the block bitfield 0xFF, signifying that all the blocks in the window were received (for this configuration, only one block). Subsequent data blocks are sent from the Source Originator APS 602 to the parent ZR 550 (with only two data blocks shown for simplicity purposes only), i.e., transmission of data block '1' 715 and data block '6' 720 (where the other data blocks 2 ... 5 use the same pattern 719), with consequent ACKs 716, 721 returned to the Source Originator APS 602. Each correctly received data block is then queued, in order, at the parent ZR 510. If the queue at the parent fills, the remaining APS blocks are not proactively APS acknowledged by the parent ZR 510 and their retransmission will occur by the Source Originator APS 602.

In this multiple re-transmission example, the ZED Recipient NWK APS 586 has sent a MCPS-Data.request (AR=1) command message 707 to the Recipient MAC 584 in order to check for messages in the parent and extract them. In this example, the Recipient MAC 584 sends a Data.request (AR=1) message 709 to the Parent ZR 510 NWK MAC, which responds with a MAC ACK (Frame Pending (FP)=1) message at 722. The MAC ACK message at 722 sent by the Parent ZR 510 NWK MAC in response to the Data.request (AR=1) message 709 can use the Frame Pending bit set to '1' to indicate to the ZED 550 that there are more blocks for it in the indirect queue, or any other packet for it, unrelated to this APS transmission.

In accordance with examples herein described and as a consequence of individual APS ACKs being sent to the Source Originator APS 602 from the parent ZR 510 when a data block has been received, the parent ZR 510 is configured to send each data block in turn to the recipient MAC 584 of the ZED 550, and wait for a MAC ACK from the recipient MAC 584 of the ZED 550 before the next data block is sent from the queued data blocks, thereby de-queueing the data blocks one after another. In this manner, at 727, the first data block: Data (AR=1) block 0 (FP=1) is sent across the radio medium from the parent ZR NWK MAC to the ZED 550 Recipient MAC 584, which is returned with a MAC ACK 729 and the Recipient MAC 584 sends a MCPS-Data.indication message 750 to the recipient NWK APS 586. Here, the receiver of the ZED 550 starts a timer (`apscAckWaitDuration') 712 and expects a response within (in this example) '4' durations.

Thereafter, at 737, the second data block: Data (AR=1) block 1 (FP=1) is sent across the radio medium from the parent ZR MAC to the ZED 550 Recipient MAC 584, which is returned with a MAC ACK 739 and the Recipient MAC 584 sends a MCPS-Data.indication message 755 to the recipient NWK APS 586. This process continues until the penultimate data block is sent, i.e., data block 6. At 747, the seventh data block (data block `6'): Data (AR=1) block 6 (FP=1) is sent across the radio medium from the parent ZR MAC to the ZED 550 Recipient MAC 584, which is returned with a MAC ACK 749 and the Recipient MAC 584 sends a MCPS-Data.indication message 760 to the recipient NWK APS 586.

Notably, the ZED 550 performs no polling in this approach for every block of the transmission as in the standard approach. The window size of '1' means that the Source Originator APS 602 will not transmit in advance multiple blocks, but only one, and then will wait for its APS acknowledgement. This will force the ZED to poll (using a Data Request command message 707) for each block in the fragmented transmission. As the parent ZR 510 proactively acknowledges the blocks, except the last one, the Source Originator APS 602 is free to transmit them as long as the parent's queue can accommodate them. When the ZED 550 wakes up and polls for the first time, it will receive all the APS blocks available in the parent ZR 510 queue. This is in contrast to the known network approach that would require the ZED 550 to poll for a whole window size a number of times for any failed delivery of data blocks.

For the final data block, data block '7' 771 received from Source Originator APS 602, the parent NWK MAC of the ZR 510 places the data block 771 into an indirect queue and awaits a request from its ZED and does not send an APS ACK to the Source Originator APS 602, reverting to the standard behavior of a Zigbee^{™} parent. A request MCPS-DATA.request (AR=1) 762 is sent from recipient NWK APS 586 to recipient MAC 584, which then issues a DATA.request 772 (AR=1) to the NWK MAC of the ZR 510. The MAC of the ZR 510 sends a MAC ACK 774 and then the final data block (data block '7') DATA (AR=1) 776 to the recipient MAC 584. The recipient MAC 584 sends a final MCPS-DATA.indication 765 to the recipient NWK APS 586, confirming all data blocks have been passed and sends a MAC ACK 778 to the MAC of the ZR 510.

Finally, the ZED 550 Recipient NWK APS 586 sends an APS ACK 770 to the Source Originator APS 602 (for brevity, the standard transmission of this message across the parent and the multi-hop network path is not shown). Once the fragmented data has been successfully received at the ZED 550, acknowledged with the APS ACK 770, the Source Originator APS 602 sends an APSDE-Data.confirm message 775 to an Originator next higher layer, as illustrated in FIG. 7.

Thus, in this manner, and one by one, all the buffered blocks are extracted by the ZED 550 from its parent ZR 510. This is in contrast to the standard behavior for a window size of `8', which is that the ZED 550 will send an APS ACK to its parent ZR 510 with the Acknowledgement Field set to 0xFF on the 8^{th} data block. The parent ZR 510 shall not relay this packet to the Source Originator APS 602 unless it also marks the last block in the transmission (i.e. the field Block Number is set to '10' in the example, based on the previous description of an APS extended header showing a total of '11' fragment blocks).

In some examples, when the ZED 550 polls its first block of the fragmented transmission, it will start to validate the NWK and APS security. If anything fails (e.g., incorrect Frame Counters, decryption failure, etc.), the ZED 550 can immediately send an APS ACK with the Acknowledgement Field set to '0'. The standard meaning within the Zigbee^{™} specification of this value is that for a window size of `8', no block was received correctly. In this scenario, the parent ZR 510 can interpret this as a critical failure of the transmission from which typically the originator cannot recover from and is usually seen only in stack incorrect behavior, due to bugs, not in a correct operation, or, in the case of mismatched keys, a protocol synchronization failure that leads to renegotiating keys or rejoining the network.

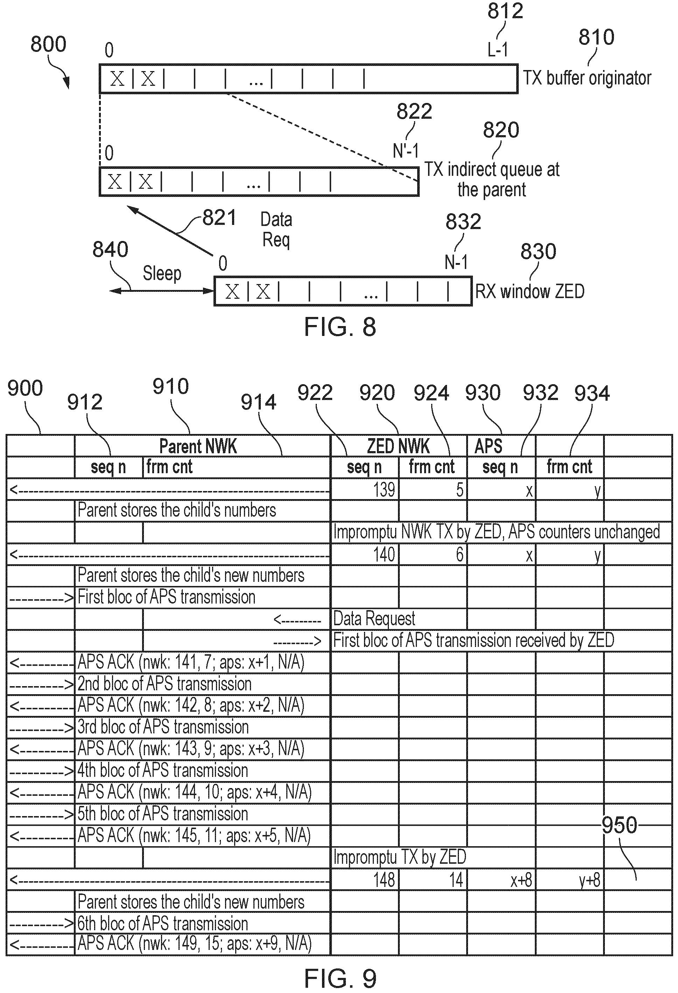

Referring now to FIG. 8, a simplified timing diagram of fragmented transmissions 800 is illustrated, according to some examples. The simplified timing diagram illustrates the buffered transmit data 810 at a Source Originator APS 602, buffering data blocks from block '0' to data block `L-1' 812. The simplified timing diagram illustrates the buffered transmit data 820 the parent ZR 510, buffering data blocks from block '0' to data block `N-1' 822. The indirect queue of an IEEE 802.15.4 parent is used to store the frames towards one of its 'sleepy' ZED children, and it is not used for direct transmissions in which the receiver has its radio subsystem always 'on', receiving. The packets are kept in this indirect queue from where a sleepy ZED child extracts them using a Poll/Data.request mechanism when it wakes up from a sleep mode at 840. The simplified timing diagram also illustrates a time delay of communications with the ZED the received window 830 from '0' to 'N-1' at the ZED following a wake-up from a sleep mode at 840 and in response to sending a data request message 821 to its parent ZR 510.

In order to understand better how the timing diagram may be employed in examples herein described, it is worth appreciating why an APS ACK may have to be APS encrypted and how the parent ZR 510 may not know the APS key in order to perform this operation. Hence, the ZED provides the Message Integrity Codes (MICs) for the APS ACKs. The APS level encryption of the data and its ACK frame is not explicitly defined in the Zigbee^{™} standard. In the chapter of the Zigbee^{™} standard titled "Conditional Encryption of APS Data", the specification leaves this policy to be determined by the device and application profiles. It is possible that a particular implementation of an APS transmitter that receives ACKs to restrict the validation of such APS ACKs, only if they are APS encrypted if the APS data was sent encrypted. The parent ZR 510 of a ZED 550 may not be able to know the unique APS link key established between the Source Originator APS 602 and the ZED Recipient APS layer 586. Hence, a standard Zigbee^{™} implementation will not be able to successfully implement the mechanism described herein in which the parent ZR 510 sends APS ACKs on behalf of its child ZED 550. One envisioned example approach would be for ZED 550 to send its unique APS link key established between the pair (ZED 550, Source Originator APS 602) to the parent ZR 510. This message exchange can be protected in itself at APS layer with a unique key established between the ZED 550 and its parent ZR's APS layer. A second envisioned example approach is possible without exposing to the parent ZR 510 of the unique APS link key known by the ZED. This second envisioned example approach takes into account the specific format and encryption process of the APS acknowledgement, which is a zero-payload message. For example, after a successful reception of an APS message (e.g., transmission of data block '1' 715), the parent ZR 510 may be configured to prepare the APS ACK 716, which may need to be encrypted.

In some examples, the encryption process of an APS ACK uses as input the concatenation of the strings 'ApsHeader' and 'Auxilliary.Header'. The APS ACK contains in these headers two identifiers that communicate to the source what is being acknowledged. These are: the APS counter of the data packet and the block identifier if this packet was fragmented. These are originally set by the Source Originator APS 602 in the message and the receiver copies them in the APS ACK header and encrypts it.

In general, an encrypted process results in three components of the new encrypted structure (see Table 1 below from the Zigbee^{™} standard, section 4.4.9). Here, the headers are transmitted unencrypted to allow the decryption process to work at the receiver, then the encrypted payload and the MIC used for validating the integrity and the authenticity of the message. The APS ACK has a zero-length payload; hence the middle component will not be present in the structure of the response, only the MIC is computed.

**Table 1: Secured APS Layer Frame Format:**

| **Octets: Variable** | **5 or 13** | **Variable** | |
|---|---|---|---|
| Original APS header ([B7], clause 7.1) | Auxiliary frame header | Encrypted payload | Encrypted message integrity code (MIC) |
| | | Secure frame payload = output of CCM | |
| Full APS header | | Secured APS payload | |

Each of these identifiers is known, once the first packet from the series of blocks of a fragmented transmission was received. The Zigbee^{™} standard specifies that 'all blocks in a fragmented transmission shall have the same APS Counter value'. The first block also communicates in its header the number of blocks that will follow. Hence, it is possible for the ZED 550 to pre-compute in advance the MIC for all the expected 'N' blocks, from '0' to 'N-1', and to communicate these codes to the parent ZR 510 as soon as the first block is received by the ZED 550. The parent ZR 510 will use these codes to build the APS ACKs for the corresponding block identifiers and pro-actively respond with APS ACK on behalf of its child ZED.

FIG. 9 illustrates a table 900 of amended sequence numbers when APS ACKs are sent, according to some examples, with a parent ZR NWK 910 having a list of sequence numbers 912 and frame count 914. As illustrated, a ZED 920 has a list of sequence numbers 922 and frame count 924 and the APS 930 has a list of sequence numbers 932 and frame count 934.

The sequence number is used by the distant receiver for duplicate removal and it is allowed to be newer with gaps. The frame counters are used to defend against replay security attacks and are used in the NWK and APS encryption. The parent may not have the unique link key of the child to be able to renumber the packets sent by the child during the reassembly process. Hence the gaps introduced by the ZED in the number sequence of its unicast impromptu transmissions resolve this special situation.

In some examples, during reassembly at the ZED 920, the ZED 920 may have over-lapping network activity, although its network activity will be less than a router, such as its parent ZR NWK 910, as its communications are mainly directed at its parent ZR NWK 910 or are broadcast. In some instances, the ZED 920 may send an outgoing unicast frame towards other destinations, or its parent ZR NWK 910. The APS ACKs sent by the parent ZR NWK 910 on its behalf have increased the sequence numbers 922, 932 and the frame counts 924, 934 of its ZED 920 and this is not yet aware of those changes. Hence, once a ZED 920 detects that a fragmented transmission has begun (A), it will increase its security counters at 950 at NWK and APS layers by `8', the optimized window size it employs strictly between the parent ZR NWK 910 and itself.

In the second example, illustrated in FIG. 7, if ZED 920 needs to send a packet, it will use the updated sequence numbers. The parent ZR NWK 910 will store the updated sequence numbers and use them as a base for the next APS ACKs sent on behalf of this ZED 920 child which incremented the counters only by '1. Basically, during reassembly, the ZED 920 will increase the sequence number / frame counters by `8', instead of by '1' as in normal situations. This allows the ZED 920 to jump over the entire sequence of APS ACKs sent on its behalf and of which it is not aware of.

The following detailed description is merely illustrative in nature and is not intended to limit the embodiments of the subject matter or the application and uses of such embodiments. As used herein, the word "example" means "serving as an example, instance, or illustration." Any implementation described herein as an example is not necessarily to be construed as preferred or advantageous over other implementations.

In one aspect, there is described herein a method for delivering data frames from a source device to a Zigbee end device, ZED, via a Zigbee router device. The method includes, at the Zigbee router device, receiving a data request from the source device; receiving at least one data block from a window that includes a plurality of data blocks from the source device, and placing the received at least one data block in a queue for transmission to the ZED; decrypting a network, NWK, layer payload of received data blocks; extracting application support sublayer, APS, header information from the decrypted NWK layer payload and determining therefrom if fragmentation is used; and extracting APS transmission parameters from the decrypted NWK layer payload that enable the Zigbee router device to identify re-transmitted APS data. The method further includes: receiving and acknowledging a data request from the ZED; transmitting the at least one received data block from the queue, to the ZED and in response receiving an acknowledgement for a successfully received transmission from the ZED. The method further includes receiving a re-transmission of the at least one APS data block from the source device; dropping at least one APS re-transmitted data block (630) that had previously been received at the Zigbee router device and successfully delivered to and acknowledged at MAC layer by the ZED, and placing a newly received at least one APS re-transmitted data block in the queue for transmission to the ZED if not already queued; and transmitting the at least one received re-transmitted data block from the queue, to the ZED.

Fragmentation is an optional feature in the Zigbee^{™} standard. It is not always used and even if it enabled, it is used only if the payload is larger than a configurable threshold. Hence, it is used in general for larger packets. When used, the parent ZR should or must parse ALL and EVERY frame to see if that marks the beginning of a fragmented transmission. Thus, examples described herein employ adding APS layer fragmentation, to clarify a reception of data blocks from within a fragmented transmission.

The parent router device 510 comprises a processor, transmitter, receiver and memory configured to carry out the above-described method. The child device, such as ZED 550, also comprises a processor, transmitter, receiver and memory configured to carry out the above-described method.

In the foregoing specification, the description has been explained with reference to specific example embodiments. It will, however, be evident that various modifications and changes may be made therein without departing from the scope as set forth in the appended claims and that the claims are not limited to the specific examples described above.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals. Those skilled in the art will recognize that the architectures depicted herein are merely exemplary, and that in fact many other architectures can be implemented which achieve the same functionality.

Any arrangement of components to achieve the same functionality is effectively 'associated' such that the desired functionality is achieved. Hence, any two components herein combined to achieve a particular functionality can be seen as 'associated with' each other such that the desired functionality is achieved, irrespective of architectures or intermediary components. Likewise, any two components so associated can also be viewed as being 'operably connected,' or 'operably coupled,' to each other to achieve the desired functionality.

Furthermore, those skilled in the art will recognize that boundaries between the above-described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments. Also, for example in one embodiment, the illustrated examples may be implemented as circuitry located on a single integrated circuit or within a same device. In some examples, the various components within the de-warp processor can be realized in discrete or integrated component form, with an ultimate structure therefore being an application-specific or design selection. As the illustrated example embodiments may, for the most part, be implemented using electronic components and circuits known to those skilled in the art, details will not be explained in any greater extent than that considered necessary as illustrated below, for the understanding and appreciation of the underlying concepts and in order not to obfuscate or distract from the teachings thereof. A skilled artisan will appreciate that the level of integration of processor circuits or components may be, in some instances, implementation-dependent.

Also, for example, the examples, or portions thereof, may implemented as soft or code representations of physical circuitry or of logical representations convertible into physical circuitry, such as in a hardware description language of any appropriate type. Also, the description is not limited to physical devices or units implemented in non-programmable hardware but can also be applied in programmable devices or units able to perform the desired sampling error and compensation by operating in accordance with suitable program code, such as minicomputers, personal computers, notepads, personal digital assistants, electronic games, automotive and other embedded systems, cell phones and various other wireless devices, commonly denoted in this application as 'computer systems'. However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms 'a' or 'an,' as used herein, are defined as one or more than one. Also, the use of introductory phrases such as 'at least one' and 'one or more' in the claims should not be construed to imply that the introduction of another claim element by the indefinite articles 'a' or 'an' limits any particular claim containing such introduced claim element to inventions containing only one such element, even when the same claim includes the introductory phrases 'one or more' or 'at least one' and indefinite articles such as 'a' or 'an.' The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. A method for delivering data frames from a source device (602) to a Zigbee end device, ZED, (550) via a Zigbee router device (510), the method comprising at the Zigbee router device (510):
receiving (605), a data request from the source device (602);
receiving at least one data block (615) from an application support sublayer, APS, layer fragmentation window that includes a plurality of data blocks from the source device (602), and placing the received at least one data block (615) in a queue for transmission to the ZED (550);
decrypting (532) a network, NWK, layer payload of received data blocks;
extracting APS header information from the decrypted NWK layer payload and determining therefrom if fragmentation is used;
extracting APS transmission parameters from the decrypted NWK layer payload that enable the Zigbee router device (510) to identify at least one re-transmitted APS data block;
receiving (609) and acknowledging (622) a data request from the ZED (550);
transmitting the at least one received data block from the queue, to the ZED (550) and in response receiving an acknowledgement for a successfully received transmission from the ZED (550);
receiving and identifying a re-transmission of the at least one APS data block (625, 630, 635) from the source device (602);
dropping at least one APS re-transmitted data block (630) that had previously been received at the Zigbee router device (510) and successfully delivered to and acknowledged at MAC layer by the ZED (550), and placing a newly received at least one APS re-transmitted data block (625, 635) in the queue for transmission to the ZED (550) if not already queued; and
transmitting (637) the at least one received re-transmitted data block (625, 635) from the queue, to the ZED (550).

2. The method of Claim 1, further comprising inspecting, from within NWK layer functionality, a cross-layer of an APS layer of the decrypted NWK layer payload to identify the at least one APS re-transmitted data block (630) to drop.

3. The method of any preceding Claim, further comprising, at the ZED (550), polling for any undelivered data blocks (655, 665).

4. The method of any preceding Claim, further comprising, at the ZED (550), transmitting a single APS acknowledgement, ACK (670), from the ZED (550) to the source device (602) following successfully receiving all of the plurality of data blocks

5. The method of any preceding Claim, wherein transmitting the single APS ACK (670), from the ZED (550) to the source device (602), indicates that the ZED (550) successfully received and reassembled all blocks in a fragmentation and wherein an ACK bitfield within the single APS ACK header is set to '0xFF'.

6. The method of Claim 5, further comprising, at the Zigbee router device (510), receiving and analysing at a medium access control, MAC, layer the single APS ACK (670) and identifying therefrom, a mismatch between data blocks that the ZED (550) had successfully received and reassembled indicated in the ACK bitfield and the blocks that the Zigbee router device (510) had transmitted to the ZED (550), and in response to an identified mismatch allowing a re-transmission of at least one block that was received at the MAC layer in ZED (550), but was not reassembled at an APS layer by the ZED (550).

7. The method of any preceding claim, wherein receiving, at the Zigbee router device (510), a transmission or a re-transmission of the data blocks (625, 630, 635) from the source device (602) comprises (re-)ordering the received data blocks in a queue for transmission to the ZED (550).

8. The method of any preceding Claim, wherein dropping, by the Zigbee router device (510), at least one APS re-transmitted data block (630) that had previously been received at the Zigbee router device (510) comprises removing any duplicate received frames from the queue.

9. A Zigbee router device (510) for delivering data frames from a source device (602) to a Zigbee end device, ZED, (550), the Zigbee router device (510) comprising:
a receiver (506) arranged to receive:
a data request (605) from the source device (602);
at least one data block (615) from a window that includes a plurality of data blocks from the source device (602), and place the received at least one data block (615) in a queue for transmission to the ZED (550); and
a data request from the ZED (550);
a signal processor (508), operably coupled to the receiver (506) and arranged to:
decrypt (532) a network, NWK, layer payload of received data blocks;
extract application support sublayer, APS, header information from the decrypted NWK layer payload and determine therefrom if fragmentation is used; and
extract APS transmission parameters from the decrypted NWK layer payload that enable the Zigbee router device (510) to identify at least one re-transmitted APS data block;
a transmitter (522, 524) operably coupled to the signal processor (508) and arranged to transmit the at least one APS received data block from the queue, to the ZED (550);
wherein the receiver (506) is further arranged to receive:
an acknowledgement for a successfully received transmission from the ZED (550); and
a re-transmission of the at least one APS data block (625, 630, 635) from the source device (602); and
wherein the signal processor (508) is arranged to identify and drop at least one APS re-transmitted data block (630) that had previously been received at the Zigbee router device (510) and successfully delivered to and acknowledged at MAC layer by the ZED (550), and place a newly received at least one APS re-transmitted data block (625, 635) in the queue for transmission to the ZED (550) if not already queued;and
wherein the transmitter is further arranged to transmit the received at least one APS re-transmitted data block (625, 635) from the queue to the ZED (550).

10. The Zigbee router device (510) of Claim 9, wherein the signal processor (508), is arranged to inspect, from within NWK layer functionality, a cross-layer of an APS layer of the decrypted NWK layer payload to identify the at least one APS re-transmitted data block (630) to drop following a determination of data frames that have previously been received at the Zigbee router device (510) and transmitted to the ZED (550).

11. The Zigbee router device (510) of Claim 9 or Claim 10, wherein the signal processor (508) comprises a decryption circuit (532) arranged to perform decryption on the NWK layer payload that contains the APS header received from the source device (602) and the signal processor is arranged to analyze data frames of the decrypted NWK payload.

12. The Zigbee router device (510) of any of preceding Claims 9 to 11, wherein the signal processor (508) comprises a traffic analysis circuit (534) arranged to monitor and record traffic, so that the Zigbee router device (510) knows what data frames have already been delivered to the ZED (550) when re-transmitted data frames are received.

13. The Zigbee router device (510) of any of preceding Claims 9 to 12, wherein the receiver is arranged to receive and analyze at medium access control, MAC, layer a single APS ACK (670), sent from the ZED (550) to the source device (602) that indicates that the ZED (550) successfully received and reassembled all blocks in a fragmentation when an ACK bitfield within the single APS ACK header is set to '0xFF' and wherein the processor is arranged to identify, from the single APS ACK (670), a mismatch between the blocks that the ZED (550) had successfully received and reassembled indicated in the ACK bitfield and the blocks that the Zigbee router device (510) had transmitted to the ZED (550), and in response to an identified mismatch the processor is arranged to allow a re-transmission of at least one block that was received at the MAC layer in ZED (550), but was not reassembled at an APS layer by the ZED (550).

14. The Zigbee router device (510) of any of preceding Claims 9 to 12, wherein the receiver is arranged to receive a transmission or a re-transmission of the data blocks (625, 630, 635) from the source device (602) and the processor is arranged to (re-)order the received data blocks in a queue for transmission to the ZED (550).

15. A Zigbee communication network comprising:
a Zigbee end device (550) arranged to support Zigbee^{™} communications;
a source device (602) arranged to provide a plurality of data frames in a window that includes a plurality of data blocks;
a Zigbee router device (510) comprising:
a memory; and
a processor (508) configured according to any of Claims 9 to 14.
